# EUROPEAN PATENT APPLICATION

(11) **EP 4 090 043 A1**
(43) Date of publication of application: **16.11.2022**
(21) Application number: 20911326.5
(22) Date of filing: 31.01.2020
(51) Int. Cl.: H04R 1/10, H04R 1/02, H04R 5/033

(54) **WIRELESS SOUND DEVICE SET COMPATIBLE WITH VARIOUS DEVICES**

(30) Priority: 10.01.2020 KR 20200003633
(71) Applicant: Makina Co., Ltd., Busan 48059 (KR)
(72) Inventor: GO, Hyo Yeon, Busan 48091 (KR); SUNG, Byeoung Ha, Gimpo-si Gyeonggi-do 10114 (KR)
(74) Representative: Hübner, Gerd
(86) International application number: PCT/KR2020/001476
(87) International publication number: WO 2021/141174

(57) **Abstract**

The present invention provides a wireless sound device set compatible with various devices. The wireless sound device set compatible with various devices according to the present invention may comprise: a wireless sound device (100); a charging case (200); a connection cable (220), a controller (230) for automatically performing one selected from a charging mode and a relay mode; and a wireless communication module (240) for receiving output sound information and transmitting same to the wireless sound device (100). An independent wireless connection causes no intervention from another external device, and thus the present invention can maintain stable pairing.

## Description

### Technical Field

The present invention relates to a wireless sound device set compatible with multiple devices and, more specifically a multi-device compatible wireless sound device set, characterized in that: it is universally used even if a dedicated earphone/earset/headphone is not provided or a device, to which game contents, video contents, etc. are provided, does not have Bluetooth communication function, so that content sound information can be output smoothly and stably regardless of file format; there is no inconvenience or bother of having to involve a separate device since a charging case for currently popularized wireless earphone/earset/earbuds is connected to a content providing device (game consoles, smart TVs, laptops, table PCs, etc.) to perform a role of a relay; and the relay function of the charging case due to connection to the content providing device and pairing between a wireless earphone and any typical portable device are automatically performed to minimize user's manipulation, thereby improving convenience of the user.

### Background Art

With the development of sound and communication technologies, the performance of not only TVs and mobile phones but also game consoles and smart devices has been greatly improved, and various digital contents provided through these devices occupy a significant proportion in modern society.

In the future, more content creators and more listeners will emerge, and more people will focus on their hobbies due to increase in single-person households compared to the past. Accordingly, customer needs will also be diversified, and product development based on the corresponding functionality will be actively implemented.

The audio and sound device market is also diversifying, and customers looking for high-quality sound devices such as earphones, earbuds, hair sets, hair phones, headphones, etc. tend to increased.

In particular, the wireless earphone market, which confronts the limitations of wired sound devices (limited distance, restriction of free movement, etc.), is newly developed and is growing rapidly. Accordingly, various wireless earphones are now appearing. In particular, in order to improve the limitations of wired sound devices, different earphones have been developed and related technologies include, for example, Korean Patent Publication No. 10-1745898 entitled "Wired and wireless combined Bluetooth earphone having an integrated charging structure with a user terminal", Korean Laid-Open Patent Publication No. 10-2018-0021030 entitled "Wireless pairing and case of earbuds", or the like.

The "wired and wireless combined Bluetooth earphone having an integrated charging structure with a user terminal" is configured of: a small communication housing; a body including an audio-communication cable; a digital connection cable; a DNA module control unit for turning on/off earphone output; and a lower power warning notification unit so that it can be charged integrally with the user terminal and can output a sound by receiving a digital audio-signal in a wired manner, however, this invention entails a limitation of not constructing a complete wireless operation system.

Further, the "wireless pairing and case of earbuds" consists of: a housing having a receiving area for a portable audio device; a cover; an input device comprising a circuitry configured to generate a signal; and a processor connected to the input device, so as to transmit a signal to wireless earbuds and to initiate a pairing sequence between electronic devices, however, this invention is functionally limited and also entails limitations in that new equipments and devices are required to implement multi-functionality.

### Disclosure

### Technical Problem

Accordingly, the present invention improves the problems of the prior art, so that it can be universally used even if a dedicated wireless sound device is not provided or a content providing device does not have Bluetooth communication function.

Further, the present invention enables universally enjoying various kinds of content sound information by means of a wireless sound device since a charging case of the wireless sound device is connected to a content providing device to serve as a relay.

Further, the present invention enables user's manipulation to be minimized since the relay function of the charging case by connection with the content providing device or a pairing between a wireless earphone and a typical portable device is automatically performed by an automatic recognition process.

### Technical Solution

According to features of the present invention to achieve the above objects, a figuration gist of the present invention is a multi-device compatible wireless sound device set with a configuration including: a wireless sound device 100 that receives output sound information wirelessly and transmits the same to a user's ear; a charging case 200 that includes a mounting space for charging ("charging space") 202a, in which the wireless sound device 100 is detachably fixed and charged wherein the charging space is connected to an internal rechargeable battery 210 and formed inside the case, and an access port 201a formed to be exposable to the outside; a connection cable 220, of which one end is connected to the access port 201a of the charging case 200 while the other end is connected to any one selected from an access terminal 251a of a content providing device 250 and a power supply 260, so as to transmit any one or more selected among an electrical charging signal and content sound information to the access port 201a; a controller 230 disposed in the charging case 200, which is automatically operated in any one selected from a charging mode and a relay mode according to whether the access port 201a is connected at one end of the connection cable 220 or not, and types of a device connected at the other end of the connection cable 220, wherein the electrical charging signal input to the access port 201a is transmitted to the charging space 202a or the electrical charging signal of the internal rechargeable battery 210 is transmitted to the charging space 202a when the charging mode is executed, and the content sound information input to the access port 201a is converted into output sound information while performing a pairing with the wireless sound device 100 when the relay mode is executed; and a wireless communication module 240 disposed in the charging case 200 and connected to the controller 230, which receives the output sound information and transmits the same to the wireless sound device 100 when the relay mode of the controller 230 is executed.

With regard to the multi-device compatible wireless sound device set according to the present invention, the wireless sound device 100 may be any one selected from the group consisting of an earphone 110, an earbud 120, a headphone 130 and an earset 140, while the content providing device 250 may be any one selected from the group consisting of a game machine main body 251, a smart TV 252, a notebook PC 253, a table PC 254 and a computer 255.

Further, with regard to the multi-device compatible wireless sound device set according to the present invention, the access port 201a of the charging case 200 and the access terminal 251a of the content providing device 250, respectively, may be implemented in a USB standard.

Further, with regard to the multi-device compatible wireless sound device set according to the present invention, the controller 230 is characterized in that;
the relay mode may be executed when the content sound information is transmitted to the access port 201a, while the charging mode may be executed when the electrical charging signal only is transmitted to the access port 201a, wherein, when satisfying all of a condition that the content providing device 250 and the charging case 200 are connected through the connection cable 220, a condition that contents are activated and output from the content providing device 250, and a condition that the content providing device 250 is a data connecting function-supported device, the controller 230 performs the relay mode so as to extract and acquire the content sound information from a main controller 252a of the content providing device 250.

Further, with regard to the multi-device compatible wireless sound device set according to the present invention, the controller 230 may include: a module 231 for determining a connection state of the access port; a module 232 for determining types of the connected device; a module 233 for determining contents of the content providing device; a module 235 for conversion of sound information; and a pairing control module 234, wherein the access port connection state determination module 231 detects whether the access port 201a is connected at one end of the connection cable 220 and, when the access port 201a is not connected at the one end of the connection cable 220, performs the charging mode, while enabling operation of the connected device type determination module 232 when the access port 201a is connected to at one end of the connection cable 220, wherein the connected device type determination module 232 detects types of the device connected at the other end of the connection cable 220 and, when the power supply 260 is connected at the other end of the connection cable 220, performs the charging mode, while enabling operation of the content providing device-derived content determination module 233 when the content providing device 250 is connected at the other end, wherein the content providing device-derived content determination module 233 detects whether the content of the content providing device 250 is activated and output and, when the content of the content providing device 250 is activated and output, performs the relay mode, wherein the sound information conversion module 235 converts a file format of the content sound information input to the access port 201a into a file format of the output sound information outputable from the wireless sound device 100 in the relay mode, and wherein the pairing control module 234 performs pairing with the wireless sound device 100 in the relay mode.

### Advantageous effects

According to the multi-device compatible wireless sound device set of the present invention, the following effects can be achieved.

First, the multi-device compatible wireless sound device set may smoothly and stably output content sound information regardless of the file format.

Second, any separate device is not required to thus eliminate the user's inconvenience, and additional costs are not incurred to thus reduce production costs.

Third, there is no interference from other external devices (keyboard, mouse, etc.) because of independent wireless connection between multi-device compatible wireless sound device sets, and pairing with a normal mobile device is automatically performed whereby the user's convenience is improved while attaining stable and rapid pairing.

### Description of Drawings

FIG. 1 is a block diagram of a multi-device compatible wireless sound device set according to an embodiment of the present invention.
FIG. 2 is a block diagram of a controller according to an embodiment of the present invention.
FIG. 3 is a flowchart illustrating the operation of the multi-device compatible wireless sound device set according to an embodiment of the present invention.

### Detailed Description of Preferred Embodiments of Invention

Hereinafter, preferred embodiments of the present invention will be described in detail with reference to the accompanying drawings 1 to 3. On the other hand, illustrating and mentioning the configurations and functions easily understood by those skilled in the art would be simplified or omitted. In particular, in the drawings and specification, detailed descriptions and illustrations of specific technical configurations and functions of elements not directly related to the technical features of the present inventions are omitted, instead, only the technical configurations related to the present invention are briefly illustrated or described.

Further, the terms described below are those defined in consideration of functions in the present invention, which may vary depending on the intention or custom of the user or operator, whereby the definition should be made based on subject matters throughout the present specification describing the present invention.

The multi-device compatible wireless sound device set 1 according to an embodiment of the present invention may consist of a configuration including a wireless sound device 100 and a charging case 200.

The wireless sound device 100 may receive output sound information wirelessly and transmit the same to an ear region of a user, may be an earphone 110, an earbud 120, a headphone 130, an earset 140, etc., and may be miniaturized and used as a carriable and portable sound output device.

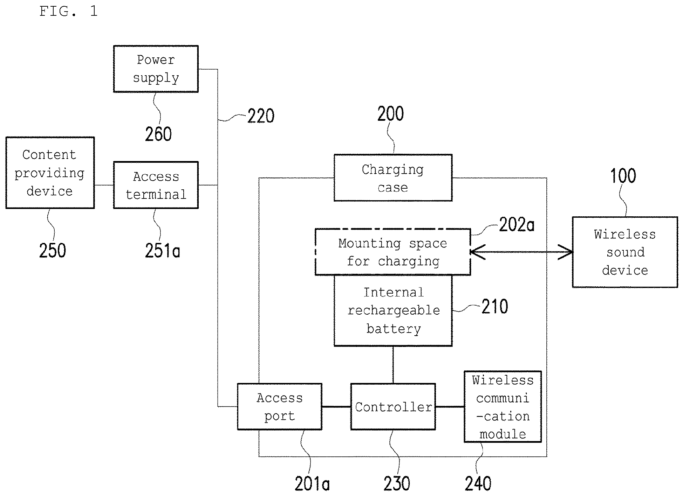

The charging case 200 may include a mounting space for charging ("charging space") 202a, as shown in FIG. 1, in which the wireless sound device 100 is detachably fixed and charged, and the charging case may be manufactured with various appearances easily carried by a user. Further, in the charging case, an access port 201a may be formed to be exposable to the outside, while a rechargeable battery 210 and a controller 230 may be provided therein.

Specifically, the charging case 200 may include a connection cable 220, a controller 230, a rechargeable battery 210 and a wireless communication module 240.

The rechargeable battery 210 may store power charged through the charging case and, when the wireless sound device 100 is mounted on the charging space 202a, power may be supplied to the wireless sound device 100 to thus charge the same.

The connection cable 220 is a connection means for connecting the charging case 200 with a specific device, of which one end is connected to the access port 201a of the charging case 200 while the other end is connected to any one selected from an access terminal 251a of a content providing device 250 and a power supply 260, so as to transmit any one or more selected among an electrical charging signal or content sound information to the access port 201a. The connection cable 220 may use a C type input terminal, but various input terminals may also be applied.

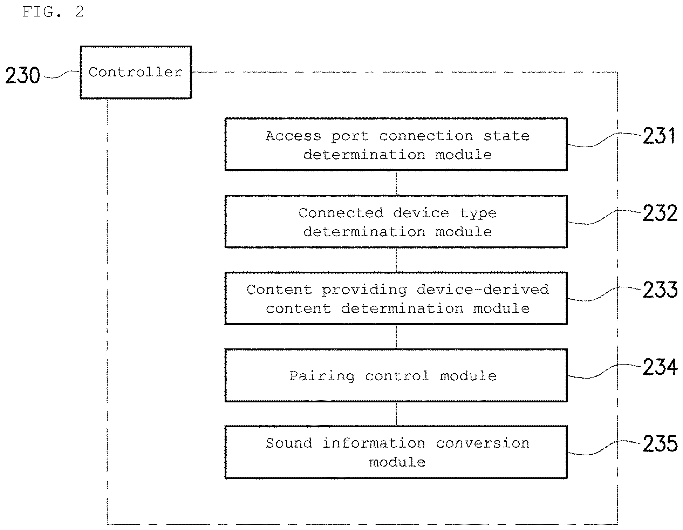

As shown in FIG. 2, the controller 230 may include an access port connection state determination module 231, a connected device type determination module 232, a content providing device-derived content determination module 233, a sound information conversion module 235, and a pairing control module 234. The controller may be disposed inside the charging case 200 and, according to whether one end of the connection cable 220 is connected to the access port 201a or not and according to types of the device connected at the other end of the connection cable 220, may be automatically operated in a charging mode or a relay mode.

When only the electric charging signal is transmitted to the access port 201a, the controller 230 may perform the charging mode. During the charging mode, the electrical charging signal input to the access port 201a may be transmitted to the charging space 202a or the electrical charging signal of the internal rechargeable battery 210 may be transmitted to the charging space 202a.

During the relay mode, the controller 230 may convert content sound information, which was extracted from a main controller 252a of the content providing device 250 and input to the access port 201a, into output sound information to perform pairing with the wireless sound device 100.

The access port connection state determination module 231 may detect whether one end of the connection cable 220 is connected to the access port 201a, wherein, when the one end of the connection cable 220 is not connected to the access port 201a, the charging mode is executed and, when the one end of the connection cable 220 is connected to the access port 201a, the connected device type determination module 232 is operated.

The connected device type determination module 232 may detect the type of the device connected at the other end of the connection cable 220, wherein, when the power supply 260 is connected at the other end of the connection cable 220, the charging mode is executed and, when the content providing device 250 is connected to the same, the content providing device-derived content determination module 233 is operated.

The content providing device-derived content determination module 233 may detect whether the content of the content providing device 250 is activated and output, wherein, when the content of the content providing device 250 is activated and output, the relay mode is executed. At this time, the content providing device 250 may correspond to a game machine main body 251, a smart TV 252, a notebook PC 253, a tablet PC 254, a computer 255, and the like, in addition, may be provided with content sound, and may include a data connection (USB-DAC) function-supported hardware installed therein or other various devices to be used.

The sound information conversion module 235 may convert a file format of the content sound information input to the access port 201a into a file format of the output sound information outputable from the wireless sound device 100 in the relay mode, followed by transmitting the same to the wireless communication module 240.

The pairing control module 234 may perform pairing with the wireless sound device 100 in the relay mode. When the relay mode is turned ON after determining activation of the content providing device 250 by the content providing device-derived content determination module 233, the wireless sound device 100 immediately undergoes pairing during storage in the charging case 200, thereby reducing a pairing time.

The wireless communication module 240 is disposed in the charging case 200 and connected to the controller 230, and may receive output sound information and transmit the same to the wireless sound device 100 when the controller 230 performs the relay mode.

The access port 201a of the charging case 200 and the access terminal 251a of the content providing device 250, respectively, are implemented in a USB standard so that an electrical signal may be transmitted stably to thus minimize signal loss.

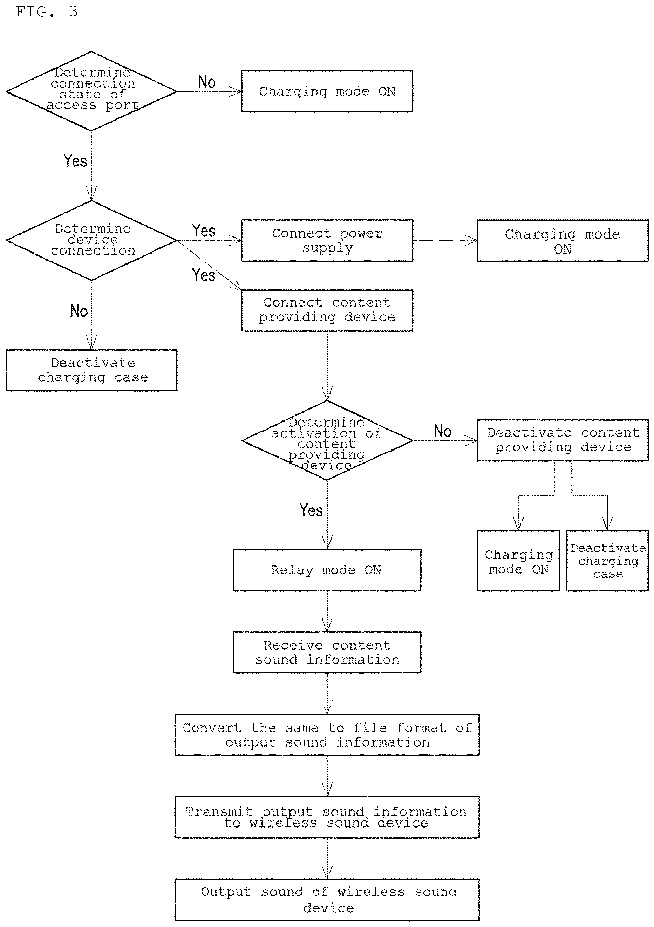

As shown in FIG. 3, according to the embodiment of the present invention, the multi-device compatible wireless sound device set 1 may be operated by the following processes. First, it is determined whether the connection cable 220 is connected to the access port 201a by the access port connection state determination module 231 of the controller 230. If the connection cable 220 is not connected to the access port, a charging mode may be executed. On the contrary, if the connection cable 220 is connected to the access port, it is determined whether a device is connected by the connected device type determination module 232 of the controller 230. If the device is not connected, the charging case 200 may be deactivated. On the contrary, if the device is connected, a different operation may be performed depending on the connected device. That is, when the power supply 260 is connected, the charging mode may be executed. Alternatively, when the content providing device 250 is connected, it is determined whether the content providing device 250 is activated by the content providing device-derived content determination module 233 of the controller 230. When the content providing device 250 is deactivated, the charging mode may be activated or the charging case 200 may be deactivated. When the content providing device 250 is activated, the relay mode may be executed and, at the same time, pairing may be performed between the wireless sound device 100 and the charging case 200 by the pairing control module 234. Further, when the content sound information is received, the content sound information may be converted into a file format of output sound information by the sound information conversion module 235 of the controller 230, and then, transmitted to the wireless communication module 240. The output sound information transmitted to the wireless communication module 240 may further be transmitted to the wireless sound device 100, resulting in sound output.

As described above, although the multi-device compatible wireless sound device set 1 according to an embodiment of the present invention has been illustrated in the above description and drawings, this is merely an example, and it would be obviously understood by those skilled in the art that various alterations and modifications may be possible within the scope of the present invention without departing from the technical spirit of the present invention.

## Claims

1. A multi-device compatible wireless sound device set, comprising:
a wireless sound device (100) that receives output sound information wirelessly and transmits the same to a user's ear;
a charging case (200) that includes a mounting space for charging ("charging space") (202a), in which the wireless sound device (100) is detachably fixed and charged wherein the charging space (202a) is connected to an internal rechargeable battery (210) and formed inside the case, and an access port (201a) formed to be exposable to the outside;
a connection cable (220), of which one end is connected to the access port (201a) of the charging case (200) while another end is connected to any one selected from an access terminal (251a) of a content providing device (250) and a power supply (260), so as to transmit any one or more selected among an electrical charging signal and content sound information to the access port (201a);
a controller (230) disposed in the charging case (200), which is automatically operated in any one selected from a charging mode and a relay mode depending on whether the access port (201a) is connected at one end of the connection cable (220) or not, and types of a device connected at the other end of the connection cable (220), wherein the electrical charging signal input to the access port (201a) is transmitted to the charging space (202a) or the electrical charging signal of the internal rechargeable battery (210) is transmitted to the charging space (202a) when the charging mode is executed, and the content sound information input to the access port (201a) is converted into output sound information while performing a pairing with the wireless sound device (100) when the relay mode is executed; and
a wireless communication module (240) disposed in the charging case (200) and connected to the controller (230), which receives the output sound information and transmits the same to the wireless sound device (100) when the relay mode of the controller (230) is executed.

2. The multi-device compatible wireless sound device set according to claim 1, wherein the wireless sound device (100) is any one selected from the group consisting of an earphone (110), an earbud (120), a headphone (130) and an earset (140), while the content providing device (250) is any one selected from the group consisting of a game machine main body (251), a smart TV (252), a notebook computer (253), a table PC (254) and a computer (255).

3. The multi-device compatible wireless sound device set according to claim 1, wherein the access port (201a) of the charging case (200) and the access terminal (251a) of the content providing device (250), respectively, are implemented in a USB standard.

4. The multi-device compatible wireless sound device set according to claim 1, wherein the controller (230) is **characterized in that**:
the relay mode is executed when the content sound information is transmitted to the access port (201a), while the charging mode is executed when the electrical charging signal only is transmitted to the access port (201a),
wherein, when satisfying all of a condition that the content providing device (250) and the charging case (200) are connected through the connection cable (220), a condition that contents are activated and output from the content providing device (250), and a condition that the content providing device (250) is a data connecting function-supported device, the controller (230) performs the relay mode so as to extract and acquire the content sound information from a main controller (252a) of the content providing device (250).

5. The multi-device compatible wireless sound device set according to claim 4, wherein the controller (230) has a configuration including: a module (231) for determining a connection state of the access port; a module (232) for determining types of the connected device; a module (233) for determining contents of the content providing device; a module (235) for conversion of sound information; and a pairing control module (234),
wherein the access port connection state determination module (231) detects whether the access port (201a) is connected at one end of the connection cable (220) and, when the access port (201a) is not connected at the one end of the connection cable (220), performs the charging mode, while enabling operation of the connected device type determination module (232) when the access port (201a) is connected at the one end of the connection cable (220),
wherein the connected device type determination module (232) detects types of the device connected at the other end of the connection cable (220) and, when the power supply (260) is connected at the other end of the connection cable (220), performs the charging mode, while enabling operation of the content providing device-derived content determination module (233) when the content providing device (250) is connected at the other end,
wherein the content providing device-derived content determination module (233) detects whether the content of the content providing device (250) is activated and output and, when the content of the content providing device (250) is activated and output, performs the relay mode,
wherein the sound information conversion module (235) converts a file format of the content sound information input to the access port (201a) into a file format of the output sound information outputable from the wireless sound device (100) in the relay mode, and
wherein the pairing control module (234) performs pairing with the wireless sound device (100) in the relay mode.
